**Europäisches Patentamt**

**European Patent Office**

**Office européen des brevets**

(11) Publication number: **0 150 225**
**B1**

(12) **EUROPEAN PATENT SPECIFICATION**

(45) Date of publication of patent specification: **23.12.87**

(21) Application number: **83112656.0**

(22) Date of filing: **15.12.83**

(51) Int. Cl.⁴: **F 28 F 9/22, F 28 F 3/08,
F 28 D 9/00**

(54) Flat plate heat exchange apparatus.

(43) Date of publication of application:
**07.08.85 Bulletin 85/32**

(45) Publication of the grant of the patent:
**23.12.87 Bulletin 87/52**

(84) Designated Contracting States:
**BE DE FR GB IT NL SE**

(56) References cited:
**EP-A-0 077 656
DE-A-2 657 666
FR-A-2 152 729
FR-A-2 509 032
GB-A-1 101 772
US-A-1 961 533
US-A-3 014 702
US-A-3 280 899
US-A-3 884 297
US-A-4 421 162**

(73) Proprietor: **THE DOW CHEMICAL COMPANY
2030 Dow Center Abbott Road P.O. Box 1967
Midland, MI 48640 (US)**

(72) Inventor: **Tollar, James Edward
908 Sterling Drive
Midland Michigan 48640 (US)**
Inventor: **Hay, Robert Allen
1686 Hubert Road
Midland Michigan 48640 (US)**
Inventor: **Crugher, Charles C.
3430 North Branch Drive
Beaverton Michigan (US)**

(74) Representative: **Weickmann, Heinrich, Dipl.-Ing.
et al
Patentanwälte Dipl.-Ing. H.Weickmann Dipl.-
Phys.Dr. K.Fincke Dipl.-Ing. F.A.Weickmann
Dipl.-Chem. B. Huber Dr.-Ing. H. Liska Dipl.-
Phys.Dr. J. Prechtel Postfach 860820
D-8000 München 86 (DE)**

# Description

This invention relates to a flat plate heat exchange apparatus particularly suited for the handling of viscous liquids.

Oftentimes in the processing of viscous liquids, heat exchange and therefore temperature control become difficult. In the processing of certain viscous liquids, for example, a polymer syrup, lack of adequate temperature control can lead to undesirable products. For example, in free radical polymerizations, loss or lack of adequate temperature control can result in products of undesirable molecular weight and hence undesirable physical properties. In isothermal reactions, lack of adequate temperature control may lead to undesired crosslinking and where a thermoplastic product is desired, undesirable crosslinked gels may appear. In some cases, excessive temperature may cause depolymerization coupled with degradation of the molecular weight.

A flat plate heat exchange apparatus suitable for the handling of viscous liquids as mentioned in the first portion of claim 1, is disclosed in US—A—3,280,899. This apparatus comprises one heat exchange zone and uses an agitator rotatable about the axis of the heat exchange members.

It would be desirable if there were available an improved heat exchange apparatus which permitted control of temperature in at least two zones thereof and reduced thermal stress.

Subject of the present invention is a heat exchange apparatus according to claim 1. The benefits and other advantages in accordance with the present invention are achieved in a heat exchange apparatus comprising a vessel (11) having an axis (A) extending from a first end (12) to a second end (13), a plate heat exchanger comprising a multiplicity of flat plates (29, 39) assembled perpendicularly to the axis of the vessel with a space between each of them, the plates being positioned in close proximity to one another to provide a flow path between adjacent plates, a plurality of heat exchange fluid tubes (24, 25, 26, 27) passing through the plate members and maintaining them in spaced relationship to each other and terminating in a bottom (32) and an upper tube sheet (23), means defining a heat exchange fluid inlet and a heat exchange fluid outlet in operative association with the heat exchange fluid tubes and inlet and outlet means (16, 17) for a heat transfer medium, characterized by a feed tube (43) disposed generally coaxially with the axis (A) of the vessel (11) affixed to the bottom tube sheet (32) and terminating at a material inlet (55) generally adjacent the first end (12), the plate heat exchanger comprising a first annular flat plate heat exchanger (plates 39) disposed coaxially about the feed tube (43) and at least a second annular flat plate heat exchanger (plates 29) disposed externally to the first one and generally coaxial therewith, means to supply (51, 45) and discharge (53, 47) heat transfer medium to the first and second heat exchanger, the vessel having a product discharge port (56) at the second end of the vessel.

Preferred embodiments are subject of claims 2 to 11.

The advantages of the present invention will become apparent from the following specification taken in connection with the drawing wherein:

Figure 1 is a partly in-section view of a heat exchange apparatus in accordance with the present invention;

Figure 2 is a schematic representation of a tube sheet in accordance with the present invention; and

Figure 3 depicts a schematic sectional view of an alternate embodiment of the invention.

In Figure 4, there is depicted an alternate construction for flat plates in accordance with the invention.

In Figure 5 is depicted an alternate embodiment of a bottom or floating tube sheet in accordance with the invention.

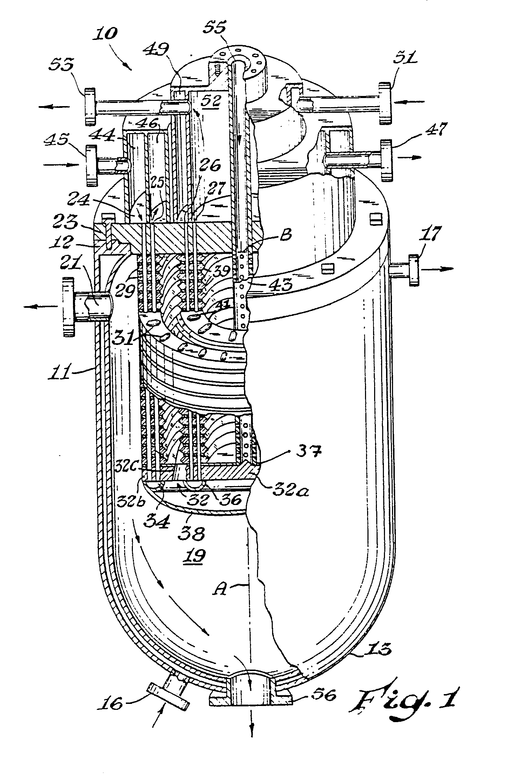

In Figure 1 there is schematically depicted a partly in-section view of a heat exchanger in accordance with the present invention generally designated by the reference numeral 10. The heat exchanger 10 comprises a double walled shell or jacketed vessel 11. The shell 11 has an upper or first end 12 and a lower or second end 13. Adjacent the lower end 13 is a jacketed heat transfer medium inlet 16. A jacket heat transfer medium outlet 17 is disposed adjacent the upper or first end 12 of the double walled shell 11. Within the double walled shell 11 is defined a heat exchanger space 19. A volatile discharge port 21 provides communication between the space 19 and space external to the double walled shell 11. A first or upper tube sheet 23 is disposed in sealing relationship with the upper end 12 of the double walled shell 11. The tube sheet 23 has passing therethrough a first plurality of heat exchange fluid tubes 24, and a second plurality of heat exchange fluid tubes 25 is inwardly radially disposed from the tubes 24 toward the axis "A" of the double walled shell 11. A third plurality of heat exchange fluid tubes 26 are generally inwardly radially disposed from tubes 25 toward the axis A. A fourth plurality of heat exchange fluid tubes 27 is radially inwardly disposed from the plurality of tubes 26. The plurality of tubes 24 and 25 passes through a plurality of axially stacked annular plate members 29, each of the members 29 has an inner edge chamfered to about a 90° angle, each of the plates 29 being separated from adjacent plates 29 by means of a plurality of spacers 31. The plurality of tubes 24 and 25 terminate in a bottom tube sheet 32 and into an annular plenum 34. The plurality of tubes 26 and 27 similarly terminate at the bottom tube sheet 32 in a generally annular plenum 36. The plenums 34 and 36 are enclosed by a dished head 38. A generally circular sheet or plate 37 is disposed on tube sheet 32 adjacent and in sealing relationship with the tube sheet 32.

Optionally, a floating tube sheet can be used to reduce thermal stresses introduced by temperature differentials between the adjacent concentric flat plate heat exchanges. Such a bottom or floating tube sheet 32 comprises a first generally circular portion 32a and a surrounding annular portion 32b. The tubes 26 and 27 engage the tube sheet portion 32a whereas tubes 24 and 26 engage the tube sheet portion 32b. Between the tube sheet portions 32a and 32b is an interface 32c which has a generally frustoconical configuration. Theoretically assuming the heat exchanger is made of materials having the same coefficient of thermal expansion, projection of the interface 32c would provide cone having its apex at point B. Point B is the location of the intersection of the plane of a face of the fixed head 23 which is generally adjacent the floating tube sheet 32 and the axis of generation A of the flat plate heat exchanger 10.

The third and fourth series of tubes 26 and 27 have disposed thereon and axially stacked generally similar annular plates 39 which are generally coaxially disposed and enclosed by the annular plates 29. Each of the plates 39 having inner and outer edges are chamfered to about 90°. The plates 39 are separated from adjacent plates 29 by spacers 41. Generally coaxially disposed with the axis A of the double walled shell 11 is a foraminous feed tube 43. The feed tube 43 is affixed to the lower tube sheet 32. Affixed to the tube sheet 23 is a first annular plenum 44 having a heat exchange inlet conduit 45. The plenum 44 communicates with the first plurality of tubes 24. A second annular plenum 46 surrounded by plenum 44 is in communication with the second plurality of tubes 25 and with a heat transfer medium outlet 47. A third annular plenum 49 surrounded by plenum 46 is in communication with a third plurality of tubes 26. The plenum 49 has in communication therewith a heat transfer medium inlet 51. Disposed within and surrounded by the plenum 49 is a fourth plenum 52, which is in communication with the plurality of tubes 27 and a heat transfer medium outlet conduit 53. The foraminous tube 43 terminates at the tube sheet 32 generally adjacent the second end 13 of the shell 11 and at a material inlet 55 generally adjacent the first or upper end 12 of the vessel 11.

In operation of the apparatus of Figure 1, material to be treated is fed into the inlet 55, passes through the foraminous tube 43 and passes to a space between the plates 39 and the tube 43. The material passes between the plates 39 into a space between the plates 29, and subsequently through the spaces between the plates 29 downwardly toward the second end 13 of the vessel 11 and out through a discharge port 56. Heat exchange fluids at the appropriate temperatures are supplied to the jacket 16 to the inlet 45 and 51 to maintain the jacket and, what may be termed the inner and outer flat plate heaters, at a desired temperature for the process employed. Volatile material if desired may be removed through port 21.

It should be noted that the plate 37 is thin relative to the thickness of tube sheet 32. The function of plate 37 may be more clearly understood with reference to Figure 2. In Figure 2, there is schematically depicted a portion of a tube sheet 32d which is disposed between the flat plates such as 29 and 39 of Figure 1. A plurality of narrow slots 59 have been cut entirely through the tube sheet 32d in a generally spiral or arcuate pattern. Such a pattern is highly desirable if there is a substantial temperature differential between the heat exchange fluid supplied to the inlet port such as port 45 and the port 51. The temperature differential can cause substantial thermal stress and deformation which is highly undesirable. By the provision of slots such as the slots 59, high stresses can be avoided and the plate or sheet such as the plate 37 of Figure 1 provides a means to prevent the material being processed from passing through the slots 59.

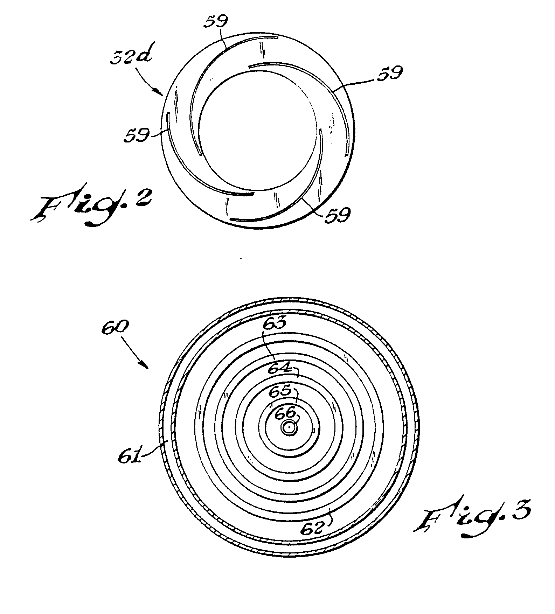

In Figure 3, there is schematically depicted an alternate arrangement of a heat transfer vessel in accordance with the present invention generally designated by the reference numeral 60. The vessel 60 comprises an external double walled vessel 61 and external flat plate heater assembly 62; a first intermediate flat plate heat exchanger 63 disposed within the heat exchanger 62, and a second intermediate flat plate heat exchanger 64 disposed within the heat exchanger 63, and an inner flat plate heat exchanger 65 disposed within the heat exchanger 64, and a foraminous feed tube 66 generally centrally disposed; the vessel 61, the heat exchangers 62, 63, 64 and 65 and a foraminous tube 66 being generally coaxially disposed.

In Figure 4, there is schematically depicted a section fraction view of an alternate embodiment generally designated by the reference numeral 70 employing a flat plate heat exchanger in accordance with the present invention. The embodiment 70 comprises a tube sheet 71. Passing therethrough is a first plurality of heat exchange fluid tubes generally designated by the reference numeral 72. A second plurality of heat exchange fluid tubes designated by the reference numeral 73 are shown behind the tubes 72. A plurality of blocks or segments designated by the reference numeral 75 of generally identical configuration are disposed over tubes 72 and 73. For example, the configuration of Figure 4 can be considered as a fractional view from the side of cylindrical flat plate heater generally of the nature of that depicted in Figure 1 where each of the blocks or segments 75 may be of rectangular configuration and be suitably drilled to receive two members of the group on conduits 72 and two members of the conduits 73. By disposing the blocks 75 in spaced apart relationship in the first layer and staggered spaced apart relationship in the second layer, a single flat plate is formed which can extend entirely around the heat exchanger. A third layer above the first and second layer is also disposed in staggered relationship to the second layer to provide one-half of the second layer of a circular flat plate. The blocks such as the blocks 75 may be of rectangular configuration or have the configuration of an isosceles trapezoid or any variation thereof depending upon the needs of a particular application.

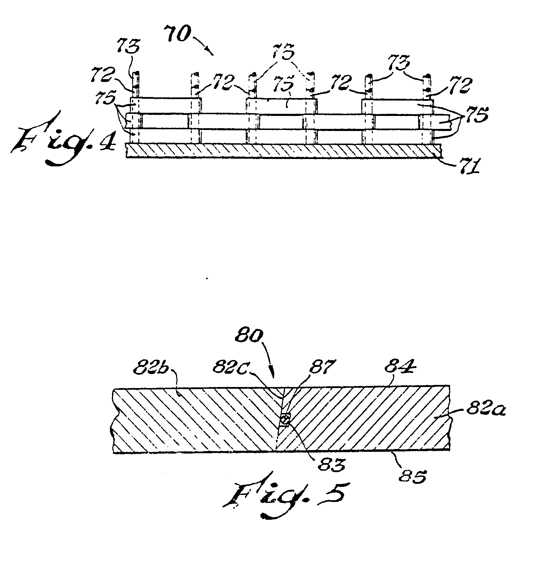

In Figure 5, there is schematically represented a fractional sectional view of a bottom or floating tube sheet 80 suitable for use in the practice of the present invention. The floating tube sheet 80 is a first generally circular configuration designated by the reference numeral 82a and a second generally annular portion 82b. The floating tube sheet 80 defines a generally annular frustoconical interface 82c disposed betwen the floating tube sheet portions 82a and 82b similar to interface 32c of Figure 1. Tube sheet portion 82a defines a generally rectangular outwardly facting annular recess 83 disposed at the interface 82c and generally intermediate between tube sheet faces 84 and 85. Disposed within the annular groove 83 is a flexible O-ring 87 which provides a liquid tight seal between tube sheet portions 82a and 82b. Alternately, the interface may be sealed with a C-ring or a close fitting lapping joint. Beneficially, the O-ring 87 is of a synthetic resinous material such as polytetrafluoroethylene or alternatively may be metal or other suitable composition depending upon the particular end use intended for the vessel.

Beneficially, flat plate heat exchangers in accordance with the present invention can be constructed with obvious boiler-making procedures of machining and welding. However, with regard to the heat exchange fluid conduits, such as conduits 24, 25, 26 and 27 of Figure 1 and conduits 72 and 73 of Figure 4, it is frequently desirable to assemble all of the heat exchange elements and/or spaces and hydraulically expand the tubes. Very satisfactory metal-to-metal contact is obtained.

Employing heat exchange vessels in accordance with the present invention permits the use of a wide variety of different profiles for the material being processed in such vessels and provides a highly desirable degree of control of the reaction mixture.

**Claims**

1. Heat exchange apparatus comprising a vessel (11) having an axis (A) extending from a first end (12) to a second end (13), a plate heat exchanger comprising a multiplicity of flat plates (29, 39) assembled perpendicularly to the axis of the vessel with a space between each of them, the plates being positioned in close proximity to one another to provide a flow path between adjacent plates, a plurality of heat exchange fluid tubes (24, 25, 26, 27) passing through the plate members and maintaining them in space relationship to each other and terminating in a bottom (32) and an upper tube sheet (23), means defining a heat exchange fluid inlet and a heat exchange fluid outlet in operative association with the heat exchange fluid tubes and inlet and outlet means (16, 17) for a heat transfer medium, characterized by a feed tube (43) disposed generally coaxially with the axis (A) of the vessel (11) afixed to the bottom tube sheet (32) and terminating at a material inlet (55) generally adjacent the first end (12), the plate heat exchanger comprising a first annular flat plate heat exchanger (plates 39) disposed coaxially about the feed tube (43) and at least a second annular flat plate heat exchanger (plates 29) disposed externally to the first one and generally coaxial therewith, means to supply (51, 45) and discharge (53, 47) heat transfer medium to the first and second heat exchanger, the vessel having a product discharge port (56) at the second end of the vessel.

2. The heat exchange apparatus according to claim 1 having more than two flat plate heat exchangers.

3. The heat exchange apparatus according to claim 1 or 2, characterized by having at least one bottom tube sheet (32d), said tube sheet having a plurality of generally arcuate slots (59) formed therein.

4. The heat exchanger according to any of claims 1 to 3 wherein the flat plates are formed from a plurality of block-like elements with ends of adjacent blocks (75) overlapping and adjacent spaced apart blocks (75) which are coplanar in combination with a second plurality of blocks (75).

5. The heat exchange apparatus according to any of the preceding claims, wherein the vessel (11) is jacketed and the jacketed vessel has heat exchange inlets (44, 45, 49, 51) and outlets (46, 47, 52, 53).

6. The heat exchange apparatus according to any of the preceding claims, wherein the heat exchange fluid tubes (24, 25, 26, 27) of the first and second flat plate heat exchangers (29, 39) terminate in annular plenums (34, 36) adjacent the bottom tube sheet (32).

7. The heat exchange apparatus according to any of the preceding claims, wherein in each flat plate heat exchanger (29, 39), the tubes (24, 25, 26, 27) are arranged in pairs and one member of each pair communicates with a generally annular input plenum (44, 49) and one member of each pair communicates with an output plenum (46, 52) adjacent the first end of the vessel.

8. The heat exchange apparatus according to any of the preceding claims, wherein the flat plates are planar.

9. The heat exchange apparatus according to any of the preceding claims, wherein adjacent plates are separated by a plurality of spacer elements (31, 41) disposed therebetween.

10. The heat exchange apparatus according to any of claims 3 to 8, wherein the slots (59) are in a generally spiral pattern and the bottom tube sheet (32) has disposed thereon a liquid impermeable sheet (37) of lesser thickness, the impermeable sheet being disposed adjacent the upper tube sheet (23).

11. The heat exchange apparatus according to any of the preceding claims, wherein the first plate heat exchanger (39) is radially spaced from the second plate heat exchanger (29).

## Patentansprüche

1. Wärmeaustauschapparatur, umfassend einen Behälter (11), der eine Achse (A) hat, die sich von einem ersten Ende (12) zu einem zweiten Ende (13) erstreckt, einen Plattenwärmeaustauscher, umfassend eine Vielzahl flacher Platten (29, 39), die rechtwinklig zu der Achse des Behälters aufgebaut sind, mit jeweils einem Zwischenraum zwischen ihnen, wobei die Platten in nächster Nähe zueinander positioniert sind, um einen Strömungsweg zwischen benachbarten Platten vorzusehen, eine Vielzahl von Wärmeaustauschfluidrohren (24, 25, 26, 27), die durch die Plattenteile hindurchgehen und diese in ihren Abstandsbeziehungen zueinander halten und die in einem Boden (32) und in einer oberen Rohrplatte (23) enden, Mittel, die einen Wärmeaustauschfluideinlaß und einen Wärmeaustauschfluidauslaß festlegen, in wirksamer Verbindung mit den Wärmeaustauschfluidrohren und Einlaß- und Auslaßmittel (16, 17) für ein Wärmeübertragungsmedium, gekennzeichnet durch ein Zuführrohr (43), das im wesentlichen koaxial zu der Achse (A) des Behälters (11) angeordnet und an der Bodenrohrplatte (32) befestigt ist und das an einem im wesentlichen dem ersten Ende (12) benachbarten Materialeinlaß (55) endet, wobei der Plattenwärmeaustauscher einen ersten ringförmigen Flachplattenwärmeaustauscher (Platten 39), der koaxial um das Zuführrohr angeordnet ist und mindestens einen zweiten ringförmigen Flachplattenwärmeaustauscher (Platten 29), der außerhalb des ersten und im wesentlichen koaxial zu diesem angeordnet ist, umfaßt, und durch Mittel zum Zuführen (51, 45) und Abführen (53, 47) des Wärmeübertragungsmediums zu dem ersten und dem zweiten Wärmeaustauscher, wobei der Behälter eine Produktaustrittsöffnung (56) am zweiten Ende des Behälters hat.

2. Die Wärmeaustauschapparatur nach Anspruch 1 mit mehr als zwei Flachplattenwärmeaustauschern.

3. Die Wärmeaustauschapparatur nach Anspruch 1 oder 2, gekennzeichnet durch wenigstens eine Bodenrohrplatte (32d), wobei die Rohrplatte eine Vielzahl im wesentlichen bogenförmiger Schlitze (59) hat, die in die Rohrplatte geformt sind.

4. Die Wärmeaustauschapparatur nach einem der Ansprüche 1 bis 3, dadurch gekennzeichnet, daß die flachen Platten durch eine Vielzahl blockförmiger Elemente mit überlappenden Enden benachbarter Blöcke (75) und benachbart auseinanderliegenden Blöcken (75), die koplanar in Verbindung mit einer zweiten Vielzahl von Blöcken (75) sind, gebildet werden.

5. Die Wärmeaustauschapparatur nach einem der vorhergehenden Ansprüche, dadurch gekennzeichnet, daß der Behälter (11) ummantelt ist und daß der ummantelte Behälter Wärmeaustauscheinlässe (44, 45, 49, 51) und -auslässe (46, 47, 52, 53) hat.

6. Die Wärmeaustauschapparatur nach einem der vorhergehenden Ansprüche, dadurch gekennzeichnet, daß die Wärmeaustauschfluidrohre (24, 25, 26, 27) des ersten und des zweiten Flachplattenwärmeaustauschers (29, 39) in ringförmigen Füllräumen (34, 36) enden, die der Bodenrohrplatte (32) benachbart sind.

7. Die Wärmeaustauschapparatur nach einem der vorhergehenden Ansprüche, dadurch gekennzeichnet, daß in jeden Flachplattenwärmeaustauscher (29, 39) die Rohre (24, 25, 26, 27) in Paaren angeordnet sind und daß ein Teil jedes Paares mit einem im wesentlichen ringförmigen Eingangsfüllraum (44, 49) kommuniziert und ein Teil jedes Paares mit einem Ausgangsfüllraum (46, 52), der dem ersten Ende des Behälters benachbart ist, kommuniziert.

8. Die Wärmeaustauschapparatur nach einem der vorhergehenden Ansprüche, dadurch gekennzeichnet, daß die flachen Platten eben sind.

9. Die Wärmeaustauschapparatur nach einem der vorhergehenden Ansprüche, dadurch gekennzeichnet, daß benachbarte Platten durch eine Vielzahl von Abstandselementen (31, 41), die zwischen den Platten angeordnet sind, voneinander getrennt sind.

10. Wärmeaustauschapparatur nach einem der Ansprüche 3 bis 8, dadurch gekennzeichnet, daß die Schlitze (59) in einem im wesentlichen spiralförmigen Muster vorliegen und daß die Bodenrohrplatte (32) eine darauf angeordnete flüssigkeitsundurchlässige Platte (37) kleinerer Dicke aufweist und daß die flüssigkeitsundurchlässige Platte im wesentlichen der oberen Rohrplatte (23) benachbart angeordnet ist.

11. Die Wärmeaustauschapparatur nach einem der vorhergehenden Ansprüche, dadurch gekennzeichnet, daß der erste Plattenwärmeaustauscher (39) radial von dem zweiten Plattenwärmeaustauscher (29) distanziert ist.

## Revendications

1. Appareil d'échange de chaleur comprenant une cuve (11) dont l'axe (A) se prolonge d'une première extrémité (12) à une deuxième extrémité (13), un échangeur de chaleur à plateaux comprenant une multiplicité de plateaux plats (29, 39) assemblés perpendiculairement à l'axe de la cuve avec un espace entre chacun d'eux, ces plateaux étant disposés très près l'un de l'autre de manière à ménager un trajet d'écoulement entre plateaux adjacents, une pluralité de tubes (24, 25, 26, 27) de fluides d'échange de chaleur traversant les plateaux et les maintenant à une certaine distance les uns des autres et se terminant dans une plaque tubulaire inférieure (32) et dans une plaque tubulaire supérieure (23), des moyens formant une entrée de fluide d'échange de chaleur et une sortie de fluide d'échange de chaleur fonctionnant en association avec les tubes de fluides d'échange de chaleur et des moyens d'entrée et de sortie (16, 17) d'un agent de transfert de chaleur, caractérisé par un tube (43) d'alimentation disposé de façon générale coaxialement à l'axe (A) de la cuve (11), fixé à la plaque tubulaire inférieure (32) et se terminant à une entrée (55) de matières généralement adjacent) à la première extrémité (12), l'échangeur de chaleur à plateaux comprenant un premier échangeur de chaleur à plateaux plats annulaires (plateaux 39) disposé coaxialement autour du tube (43) d'alimentation et au moins un deuxième échangeur de chaleur à plateaux plats annulaires (plateaux 29) disposé extérieurement au premier et généralement coaxial à celui-ci, des moyens d'introduction (51, 45) et d'évacuation (53, 47) de l'agent de transfert de chaleur vers le premier et le deuxième échangeurs de chaleur, la cuve comportant un orifice (56) d'évacuation des produits à sa deuxième extrémité.

2. Appareil d'échange de chaleur suivant la revendication 1, comportant plus de deux échangeurs de chaleur à plateaux plats.

3. Appareil d'échange de chaleur suivant les revendications 1 ou 2, caractérisé en ce qu'il comporte au moins une plaque tubulaire inférieure (32), une pluralité de rainures (55) généralement arquées étant formées dans cette plaque tubulaire.

4. Appareil d'échange de chaleur suivant l'une quelconque des revendications 1 à 3, dans lequel les plateaux plats sont formés d'une pluralité d'éléments analogues à des blocs, les extrémités des blocs adjacents (75) recouvrant et étant contiguës aux blocs (75) espacés entre eux, qui sont coplanaires entre eux, en combinaison avec une deuxième pluralité de blocs (75).

5. Appareil d'échange de chaleur suivant l'une quelconque des revendications précédentes, dans lequel la cuve (11) est chemisée et cette cuve chemisée est dotée d'entrées (44, 45, 49, 51) et des sorties (46, 47, 52, 53) d'échange de chaleur.

6. Appareil d'échange de chaleur suivant l'une quelconque des revendications précédentes, dans lequel les tubes (24, 25, 26, 27) de fluides d'échange de chaleur des premier et deuxième échangeurs de chaleur (29, 39) à plateaux plats se terminent dans des chambres annulaires (34, 36) contiguës à la plaque tubulaire inférieure (32).

7. Appareil d'échange de chaleur suivant l'une quelconque des revendications précédentes, dans lequel dans chaque échangeur de chaleur (29, 39) à plateaux plats, les tubes (24, 25, 26, 27) sont disposés par paires et un élément de chaque paire communique avec une chambre d'entrée (44, 49) généralement annulaire, et une élément de chaque paire communique avec une chambre de sortie (46, 52) contiguë à la première extrémité de la cuve.

8. Appareil d'échange de chaleur suivant l'une quelconque des revendications précédentes, dans lequel les plateaux plats se trouvent dans un plan.

9. Appareil d'échange de chaleur suivant l'une quelconque des revendications précédentes, dans lequel les plateaux adjacents sont séparés par une pluralité d'éléments d'espacement (31, 41) disposés entre eux.

10. Appareil d'échange de chaleur suivant l'une quelconque des revendications 3 à 8, dans lequel les rainures (59) ont une configuration d'ensemble en spirale et la plaque tubulaire inférieure (32) est recouverte d'une plaque (37) imperméable aux liquides, de moindre épaisseur, cette plaque imperméable étant contiguê à la plaque tubulaire supérieure (23).

11. Appareil d'échange de chaleur suivant l'une quelconque des revendications précédentes, dans lequel le première échangeur de chaleur (39) à plateaux est espacé radialement du deuxième échangeur de chaleur (29) à plateaux.

*Fig. 1*

59

32d

59

59

59

*Fig. 2*

60

63

64

65

66

61

62

*Fig. 3*

Fig. 4

Fig. 5